# EUROPÄISCHE PATENTSCHRIFT

(11) **EP 0 529 359 B1**
(45) Veröffentlichungstag und Bekanntmachung des Hinweises auf die Patenterteilung: **16.10.1996**
(21) Anmeldenummer: 92113293.2
(22) Anmeldetag: 05.08.1992
(51) Int. Cl.: H04Q 7/26, H04M 1/72

(54) **Nebenstellenanlage mit integriertem Mobilteil**
Private branch exchange with integrated mobile application
Autocommutateur privé avec application mobile intégrée

(30) Priorität: 30.08.1991 DE 4128811
(43) Veröffentlichungstag der Anmeldung: 03.03.1993
(73) Patentinhaber: Alcatel SEL Aktiengesellschaft, D-70435 Stuttgart (DE); ALCATEL N.V., NL-1077 XX Amsterdam (NL)
(72) Erfinder: Weis, Bernd X., Dr., W-7015 Korntal (DE); Turban, Karl-Albert, W-7250 Leonberg (DE); Bezler, Monika, Dr., W-7000 Stuttgart 40 (DE); Schulz, Manfred, W-7254 Hemmingen (DE); Siegmund, Gerd, W-7000 Stuttgart 40 (DE)
(74) Vertreter: Knecht, Ulrich Karl, Dipl.-Ing.

(56) Entgegenhaltungen:
- EP-A- 0 408 024
- WO-A-90/12469
- COMMUTATION ET TRANSMISSION Bd. 7, Nr. 2, 1985, PARIS -FR-, Seiten 39 - 50; CUEUGNIET UND DUPLESSIS: 'RADIOCOM 2000 Reseau multiservice de radiotelephonie'

## Beschreibung

Heutige Entwicklungsrichtungen im Bereich der mobilen Kommunikation zeigen Möglichkeiten, um auch an Nebenstellenanlagen schnurlose Endgeräte betreiben Zu können. Solche bekannten drahtlosen (wireless) Nebenstellenanlagen (WPABX) (z.B. die Patentanmeldung WO-A-90/12469 und der Artikel "Airwaves, architecture and tomorrow's PABX", von Douglas Postlethwaite, Communications International, May 1990, p. 59 - 67) bestehen aus einer bekannten Nebenstellenanlage, an die auch drahtgebundene Endgeräte angeschlossen sind. Die Nebenstellenanlage hat in einer einfachsten Ausführung je Funkzelle eine Basisstation, die mit der Nebenstellenanlage verbunden ist.

Komfortable Ausgestaltungen weisen eine Vorgesetzte (auch als "add-on" bezeichnete) Vermittlungsfunktionen ausführende Einheit (RBX) zur Steuerung mehrerer Basisstationen auf.

Somit bestehen die aufgezeigten drahtlosen Nebenstellenanlagen immer aus Zwei eigenständigen Teilen, wobei der "mobile" Teil wie ein weiterer Teilnehmer, aus Sicht der bekannten Nebenstellenanlage, an analoge oder digitale Leitungsschnittstellen der bekannten Nebenstellenanlage angeschlossen ist.

Der Erfindung liegt die Aufgabe zugrunde, eine Nebenstellenanlage mit einem integrierten Mobilteil zu schaffen.

Diese Aufgabe wird erfindungsgemäß durch die Lehre des Patentanspruchs 1 gelöst.

Durch die Bereitstellung von frei konfigurierbaren Schnittstellenmodulen für drahtgebundene wie für drahtlose Endgeräte und durch die Aufteilung der Steuerung derart, daß Vermittlungs- und Leistungsmerkmalssteuerungsaufgaben durch eine Zentralsteuereinheit und alle Verbindungsaufbau- und -abbausteuerungen für die schnurlose Endgeräte durch eine untergeordnete Steuereinheit erledigt werden, ergibt sich eine integrierte Lösung für eine Nebenstellenanlage, die sowohl drahtgebundene als auch schnurlose Endgeräte mit allen Leistungsmerkmalen der Nebenstellenanlage steuern kann.

Da die untergeordnete Steuereinheit einen vorgegebenen, den schnurlosen Endgeräten zugeordneten Satz von Rufnummern bearbeitet, sind die Schnittstellenmodule in vorteilhafter Weise als ISDM-S_{O}-Schnittstellen ausbildbar, wobei eine Protokollumsetzung von ISDN zu DECT für die schnurlosen Endgeräte erst in der zugeordneten Basisstation erfolgt. Dies ist deshalb wichtig, da das ISDN-Protokoll nur mit Rufnummern arbeiten kann, so daß in der Nebenstellenanlage nur mit dem ISDM-Protokoll gearbeitet werden muß. Dies bedeutet, daß bereits existierende ISDN-fähige-Nebenstellenanlagen direkt verwendet werden können.

Damit können die schnurlosen Endgeräte einerseits sämtliche im ISDM definierten Leistungsmerkmale benutzen, andererseits aber gemäß dem DECT-Protokoll arbeiten, so daß unabhängig von einem Hersteller, sämtliche nach DECT-Protokoll arbeitende schnurlosen Endgeräte verwendbar sind.

Weitere vorteilhafte Ausgestaltungen des Gegenstandes der Erfindung sind den Unteransprüchen zu entnehmen.

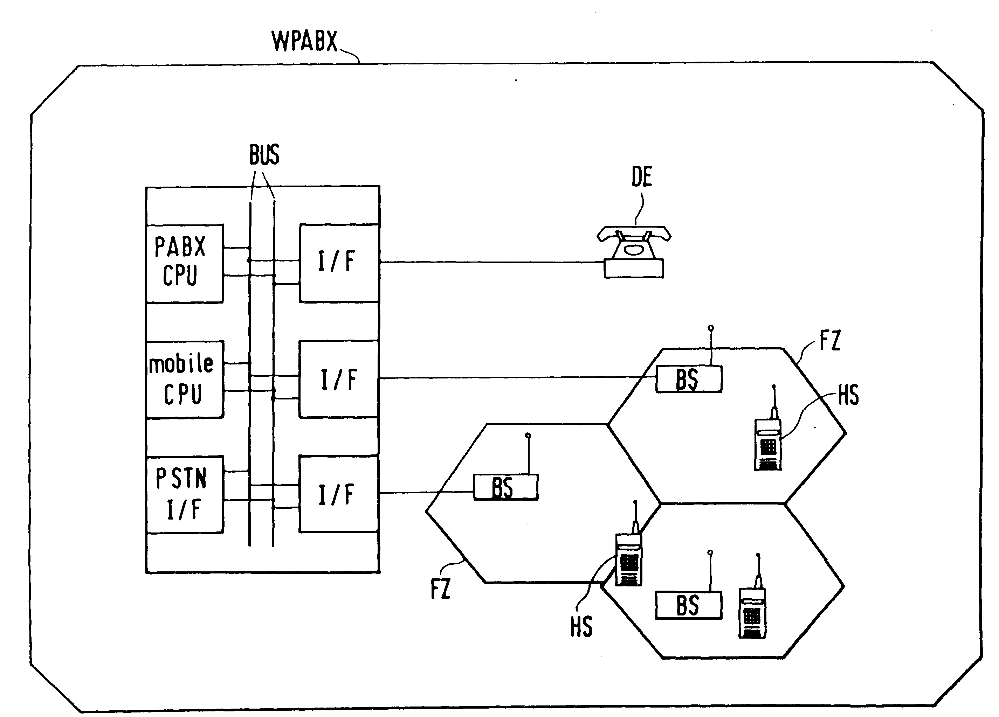

Im folgenden wird anhand der Zeichnung ein Ausführungsbeispiel erläutert.

Die Figur zeigt den strukturellen Aufbau einer erfindungsgemäßen Nebenstellenanlage.

Die erfindungsgemäße Nebenstellenanlage WPABX enthält eine Vielzahl frei konfigurierbarer Schnittstellenmodule I/F zum Anschließen einer Vielzahl von drahtgebundenen Endgeräten DE und zweier je eine Funkzelle FZ bedienenden Basisstationen BS. Die Basisstationen BS sind über eine Luftschnittstelle je mit einer Vielzahl von schnurlosen Endgeräten HS verbindbar. Selbstverständlich weist die Nebenstellenanlage auch ein als Schnittstelle zu einem öffentlichen Netz konfiguriertes Schnittstellenmodul I/F PSTN auf.

Weiterhin ist eine Zentralsteuereinheit PABX-CPU für die Vermittlungsauftragsbearbeitung (Call Handling) und die Leistungsmerkmalsteuerung in der Nebenstellenanlage sowie einen der Zentralsteuereinheit PABX-CPU untergeordnete Steuereinheit Mobile-CPU zur Verarbeitung aller Verbindungsaufbau- und -abbaunachrichten für einen vorgegebenen, den schnurlosen Endgeräten HS zugeordneten Satz von Rufnummern vorgesehen.

Die Zentralsteuereinheit PABX-CPU, die untergeordnete Steuereinheit Mobile-CPU, sowie alle Schnittstellenmodule I/F, I/F PSTN sind mit einem Bussystem BUS verbunden, um einerseits Steuernachrichten zwischen den Steuereinheiten auszutauschen und um andererseits Vermittlungsaufgaben (Switching) auszuführen.

Die in der Fig. gezeigten Schnittstellenmodule I/F sind vorzugsweise als ISDN-S_{O}-Schnittstelle ausgeführt, so daß alle ISDN-Leistungsmerkmale auch für die schnurlosen Endgeräte HS zur Verfügung stehen.

Um die schnurlosen Endgeräte HS aber gemäß DECT-Protokoll (Digital European Cordless Telephone) betreiben zu können, um die für die Mobilkommunikation erarbeiteten Leistungsmerkmale nutzen zu können, wird in den Basisstationen eine ISDN-DECT Umwandlung durchgeführt. Ein zu verwendendes ISDN-Protokoll kann z.B. 1TR6 der Deutschen Bundespost Telekom sein.

Somit wird einerseits nur mit ISDN-Protokollen gearbeitet und andererseits sind alle nach DECT arbeitende schnurlose Endgeräte HS, unabhängig von den Herstellern, verwendbar.

Damit nur berechtigte schnurlose Endgeräte HS über die jeweilige Basisstation BS Verbindungen aufbauen können, wird ein den Satz von Rufnummern zugeordnete Endgeräteidentifikation durchgeführt.

Dabei ist einerseits eine sogenannte 1:1 Zuordnung vorgesehen, d.h. es gibt jeweils nur ein einziges Endgerät HS, das berechtigt ist über eine eindeutig zugeordnete Rufnummer Verbindungen aufzubauen. Solche Endgeräte können für besonders vorberechtigte Personen vorgesehen werden, so daß mit diesem Endgerät HS jederzeit innerhalb der Nebenstellenanlagen telefoniert werden kann.

Außerdem ist vorgesehen, daß eine bestimmte Anzahl von schnurlosen Endgeräten HS über eine einzige zugeordnete Rufnummer telefonieren können (Telepoint). Dadurch können z.B. Teilnehmer, denen nur ein drahtgebundenes Endgerät DE zugeordnet ist, mittels dieser schnurlosen Endgeräte HS, in einem etwas eingeschränkten Umfang, da nicht alle gleichzeitig, auch drahtlos telefonieren.

Will nun z.B. ein Benutzer eines schnurlosen Endgerätes HS eine Verbindung zu einem drahtgebundenen Endgerät DE der Mebenstellanlage WPABX aufbauen, so wird eine Verbindungaufbaunachricht über die zugeordnete Basisstation BS und das entsprechende Schnittstellenmodul I/F zum Bussystem BUS übertragen. Erfindungsgemäß hat die untergeordnete Steuereinheit Mobile-CPU auf sämtliche über das den schnurlosen Teilnehmern zugeordnete Schnittstellenmodul I/F gesendete Verbindungaufbau/abbaunachrichten allein Zugriff. Nach Erhalt einer Verbindungaufbaunachricht sendet die untergeordnete Steuereinheit Mobile-CPU eine entsprechende Steuernachricht über das Bussystem BUS zur Zentralsteuereinheit PABX-CPU, die für die Übergeordnete Vermittlungsauftragsbearbeitung (Call Handling) zuständig ist. Die Zentralsteuereinheit PABX-CPU behandelt dann den gewünschten Verbindungauftrag genauso, als ob der Auftrag von irgendeinem Teilnehmer kommen würde. Dies hat den Vorteil, daß eine bereits existierende Nebenstellenanlagensteuerung, wie hier die Zentralsteuereinheit PABX-CPU prinzipell nicht geändert werden muß. Somit erfolgt über das die Vermittlungsaufgabe ausführende Bussystem, in bekannter Weise, ein Verbindungsaufbau zum drahtgebundenen Endgerät DE.

Selbstverständlich erfolgt jeder Verbindungswunsch z.B. zu einem öffentlichen Teilnehmer in entsprechender Weise, wobei dann eine Verbindung über das Schnittstellenmodul I/F PSTN fürs öffentliche Netz erfolgt.

Matürlich kann in entsprechender Weise, d.h. ohne Eingriff in die Zentralsteuereinheit PABX-CPU, von einem schnurlosen Endgerät HS aus auch auf jedes einzelne Leistungsmerkmal der Nebenstellenanlage WPABX zugegriffen werden, da erfindungsgemäß die Zentralsteuereinheit PABX-CPU die Leistungsmerkmalbearbeitung identisch wie für jedes andere nicht mobile Endgerät durchführen kann.

Die erfindungsgemäße Nebenstellenanlage WPABX ermöglicht es ferner, daß jedes schnurlose Endgerät HS, aufgrund des in der untergeordneten Steuereinheit Mobile-CPU vorgegebenen Satzes von Rufnummern überall innerhalb der Reichweite der Funkzellen FZ erreicht werden kann (Roaming). Dazu wird durch die untergeordnete Steuereinheit Mobile-CPU eine Rundsendenachricht an alle Basisstationen BS gesendet, und dann aufgrund der Endgeräteidentifikation zum gewünschten schnurlosen Endgerät HS eine Verbindung aufgebaut.

Außerdem ist auch eine Umschaltung einer Verbindung, gesteuert durch die untergeordnete Steuereinheit, beim Wechseln von einer Funkzelle FZ zu einer anderen Funkzelle FZ während einer bestehenden Verbindung möglich (Handover), wobei dieses Umschalten der Verbindung von einer Basisstation zu einer der anderen Funkzelle zugeordneten Basisstation infolge einer Anforderung durch das schnurlose Endgerät HS erfolgt.

## Patentansprüche

1. Mebenstellenanlage (WPABX)
- mit einer Vielzahl von frei konfigurierbaren Schnittstellenmodulen (I/F) zum Anschließen einer Vielzahl drahtgebundener Endgeräte (DE) und zum Anschließen wenigstens einer eine Funkielle (FZ) bedienenden Basisstation (BS), die über eine Luftschnittstelle mit einer Vielzahl von schnurlosen Endgeräten (HS) verbindbar ist,
- mit einer Zentralsteuereinheit (PABX-CPU) für die Vermittlungsauftragsbearbeitung (Call Handling) und die Leistungsmerkmalsteuerung in der Nebenstellenanlage,
- mit einer der Zentralsteuereinheit (PABX-CPU) untergeordneten Steuereinheit (Mobile-CPU) zur Verarbeitung aller Verbindunngsaufbau- und -abbaunachrichten für einen vorgegebenen, den schnurlosen Endgeräten (HS) zugeordneten Satz von Rufnummern und
- mit einem Bussystem (BUS), an den die Zentralsteuereinheit (PABX-CPU), die untergeordnete Steuereinheit (Mobile-CPU) und die Schnittstellenmodule (I/F) zum Austauschen von Steuernachrichten sowie zum Ausführungen von Vermittlungsaufgaben angeschlossen sind.

2. Nebenstellenanlage nach Anspruch 1, mit einem ISDN-S_{O}-Schnittstellenmodul (I/F) zum Anschließen der wenigstens einen Basisstation (BS), um alle ISDN-Leistungsmerkmale über die Basisstation den schnurlosen Endgeräten (HS) zur Verfügung zu stellen.

3. Nebenstellenanlage nach Anspruch 2, bei der die mit dem ISDM-S_{O}-Schnittstellenmodul verbundene Basisstation (BS) eine ISDN-DECT-Protokoll-Umwandlung durchführt (ISDN = Integrated Services Digital Network, DECT = Digital European Cordless Telephone), so daß die über die Luftschnittstelle verbindbaren schnurlosen Endgeräte (HS) gemäß DECT-Protokollen betreibbar sind.

4. Nebenstellenanlage nach Anspruch 1, bei der die untergeordnete Steuereinheit (Mobile-CPU) entsprechend dem vorgegebenen Satz von Rufnummern eine zugeordnete Endgeräteidentifikation steuert, so daß nur berechtigte schnurlose Endgeräte (HS) über die Basisstation (BS) Verbindungen aufbauen können.

5. Nebenstellenanlage nach Anspruch 4, bei der für eine bestimmte Anzahl des Satzes von Rufnummern, jeder dieser Rufnummern nur ein einziges schnurloses Endgerät (HS) zur Kennzeichnung einer besonderen Berechtigung zugeordnet ist.

6. Nebenstellenanlage nach Anspruch 4, bei der für bestimmte Rufnummern des Satzes von Rufnummern jeweils mehrere schnurlose Endgeräte (HS) zugeordnet sind.

7. Nebenstellenanlage nach einem der Ansprüche 4 bis 6, bei der die untergeordnete Steuereinheit (Mobile-CPU) für jede über ein Schnittstellenmodul (I/F) verbundene Basisstation (BS) einen Satz von Rufnummern enthält, die jeweils den schnurlosen Endgeräten einer Funkzelle zugeordnet sind, so daß infolge einer Rundsendenachricht von der untergeordneten Steuereinheit (Mobile-CPU) zu allen Basisstationen (BS) innerhalb der Reichweite der Funkzellen der Nebenstellenanlage jedes schnurlose Endgerät (HS) aufgrund der Endgeräteidentifikation erreicht werden kann (Roaming).

8. Nebenstellenanlage nach einem der Ansprüche 4 bis 7, bei der die untergeordnete Steuereinheit (Mobile-CPU) eine bestehende Verbindung zu einem schnurlosen Endgerät (HS) beim Wechseln von einer Funkzelle zu einer anderen Funkzelle, infolge einer Anforderung durch das schnurlose Endgerät (HS), zu der der anderen Funkzelle zugeordneten Basisstation (BS) umschalten kann.

## Claims

1. A private branch exchange (WPABX) comprising:
- a number of freely configurable interface modules (I/F) for connecting a number of wired terminals (DE), and for connecting at least one base station (BS) serving a radio cell (FZ), which can be connected to a number of cordless terminals (HS) via an air interface;
- a central control unit (PABX-CPU) for call handling and service feature control in the private branch exchange;
- a control unit (mobile CPU) subordinate to the central control unit (PABX-CPU), for processing all call setup and switch-off messages for a predetermined set of call numbers assigned to the cordless terminals (HS); and
- a bus system (BUS), to which the central control unit (PABX-CPU), the subordinate control unit (mobile CPU) and the interface module (I/F) are connected, to exchange control messages and to execute switching tasks.

2. A private branch exchange as claimed in claim 1, with an ISDN-Sₒ interface module (I/F) for connecting said at least one base station (BS), in order to make all ISDN service features available to the cordless terminals (HS) via the base station.

3. A private branch exchange as claimed in claim 2, wherein the base station (BS) connected to the ISDN-Sₒ interface module performs an ISDN-DECT protocol conversion (ISDN - Integrated Services Digital Network, DECT = Digital European Cordless Telephone), so that the cordless terminals (HS), which can be connected via the air interface, are operable in accordance with DECT protocols.

4. A private branch exchange as claimed in claim 1, wherein the subordinate control unit (mobile CPU) controls an assigned terminal identification in accordance with the predetermined set of call numbers, so that only authorized cordless terminals (HS) can set up calls through the base station (BS).

5. A private branch exchange as claimed in claim 4, wherein each of a given number of call numbers from the set of call numbers is assigned to a single cordless terminal (HS) for identifying a special authorization.

6. A private branch exchange as claimed in claim 4, wherein given call numbers from the set of call numbers are assigned to several cordless terminals (HS).

7. A private branch exchange as claimed in one of claims 4 to 6, wherein the subordinate control unit (mobile CPU) for each base station (BS) connected via an interface module (I/F), contains a set of call numbers which are assigned to one of the cordless terminals of a radio cell, so that in response to a broadcast message sent by the subordinate control unit (mobile CPU) to all base stations (BS) within the range of the radio cells of the private branch exchange, each cordless terminal (HS) can be reached by means of the terminal identification (roaming).

8. A private branch exchange as claimed in one of claims 4 to 7, wherein, when a cordless terminal (HS) changes from one radio cell to another radio cell, in response to a request from a cordless terminal (HS), the subordinate control unit (mobile CPU) can switch an existing connection with a cordless terminal (HS) to the base station (BS) assigned to the other radio cell.

## Revendications

1. Central privé (WPABX) comportant
- une pluralité de modules d'interface (I/F) configurables, pour raccorder une pluralité de terminaux (DE) à fil et pour raccorder au moins une station de base (BS) d'une cellule radio (FZ), ladite station de base pouvant être reliée par une interface radio à une pluralité de terminaux (HS) sans fil,
- une unité de commande centrale (CPU-PABX) pour le traitement d'ordres de connexion (Call Handling) et la commande de caractéristique de puissance dans le central privé,
- une unité de commande (CPU-Mobile) subordonnée à l'unité de commande centrale (CPU-PABX) pour le traitement de tous les messages d'établissement et de suppression de connexion pour un jeu de numéros d'appel qui est prédéterminé et associés aux terminaux (HS) sans fil et
- un système de bus (BUS) auquel sont raccordés l'unité de commande centrale (CPU-PABX), l'unité de commande subordonnée (CPU-Mobile) et le module d'interface (I/F) pour l'échange de messages de commande ainsi que pour l'exécution de tâches de commutation.

2. Central privé suivant la revendication 1, comportant un module d'interface(I/F) Sₒ de RNIS pour le raccordement d'au moins une station de base (BS), afin de mettre à disposition toutes les caractéristiques de puissance du RNIS sur la station de base des terminaux (HS) sans fil.

3. Central privé suivant la revendication 2, dans lequel la station de base (BS) reliée au module d'interface Sₒ du RNIS effectue une conversion de protocole RNIS-DECT (RNIS = Réseau Numérique à Intégration de Servie, DECT = Digital European Cordless Telephone) de sorte que les terminaux (HS) sans fil pouvant être reliés par l'intermédiaire de l'interface radio peuvent fonctionner suivant les protocoles DECT.

4. Central privé suivant la revendication 1, dans lequel l'unité de commande subordonnée (CPU-Mobile) suivant le jeu prédéterminé de numéros d'appel commande une identification associée de terminal, de sorte que seuls les terminaux (HS) sans fil autorisés peuvent établir une connexion par l'intermédiaire de la station de base (BS).

5. Central privé suivant la revendication 4, dans lequel, pour un nombre déterminé du jeu de numéros d'appel, un seul terminal (HS) sans fil est associé à chacun de ces numéros d'appel pour caractériser une autorisation particulière.

6. Central privé suivant la revendication 4, dans lequel plusieurs terminaux (HS) sans fil sont associé à chaque fois à des numéros d'appel spécifiques du jeu de numéros d'appel.

7. Central privé suivant l'une des revendications 4 à 6, dans lequel l'unité de commande subordonnée (CPU-Mobile) contient pour chaque station de base (BS) raccordée par l'intermédiaire d'un module d'interface (I/F) un jeu de numéros d'appels qui sont associés à chaque fois aux terminaux sans fil d'une cellule radio, de sorte que suite à un message d'adresses multiples de l'unité de commande subordonnée (CPU-Mobile) à toutes les stations de base (BS) à l'intérieur de la portée des cellules radio du central privé, chaque terminal (HS) sans fil peut être atteint grâce à l'identification du terminal (Roaming).

8. Central privé suivant l'une des revendications 4 à 7, dans lequel l'unité de commande subordonnée (CPU-Mobile) peut commuter une connexion existante à un terminal (HS) sans fil lors du passage d'une cellule radio à une autre cellule radio, suite à une demande par le terminal (HS) sans fil, à la station de base (BS) associée à l'autre cellule radio.
